(19) Europäisches Patentamt
European Patent Office
Office européen des brevets

(11) **EP 3 990 299 B1**

(12) **FASCICULE DE BREVET EUROPEEN**

(45) Date de publication et mention de la délivrance du brevet:
**02.08.2023   Bulletin 2023/31**

(21) Numéro de dépôt: **20750302.0**

(22) Date de dépôt: **22.06.2020**

(51) Classification Internationale des Brevets (IPC):
**B60H 1/00** *(2006.01)*      **F25B 30/02** *(2006.01)*
**B60H 1/32** *(2006.01)*      **F25B 5/02** *(2006.01)*
**F25B 6/04** *(2006.01)*

(52) Classification Coopérative des Brevets (CPC):
**B60H 1/00278; B60H 1/00899; B60H 1/00921; F25B 5/02; F25B 6/04;** B60H 2001/00307; B60H 2001/00928; B60H 2001/00942; B60H 2001/00949; B60H 2001/3255; B60H 2001/3285; F25B 2400/0409; F25B 2600/2501

(86) Numéro de dépôt international:
**PCT/FR2020/051081**

(87) Numéro de publication internationale:
**WO 2020/260814 (30.12.2020 Gazette 2020/53)**

(54) **PROCEDE DE GESTION D'UN DISPOSITIF DE GESTION THERMIQUE POUR VEHICULE AUTOMOBILE**

VERFAHREN ZUR VERWALTUNG EINER WÄRMEVERWALTUNGSVORRICHTUNG FÜR EIN KRAFTFAHRZEUG

METHOD FOR MANAGING A THERMAL MANAGEMENT DEVICE FOR A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **28.06.2019   FR 1907104**

(43) Date de publication de la demande:
**04.05.2022   Bulletin 2022/18**

(73) Titulaire: **VALEO SYSTEMES THERMIQUES**
**78320 Le Mesnil Saint-Denis (FR)**

(72) Inventeurs:
• **BENOUALI, Jugurtha**
 **78320 LE MESNIL SAINT-DENIS (FR)**
• **BEAUVIS, Régis**
 **78320 LE MESNIL SAINT-DENIS (FR)**
• **LIU, Jin-Ming**
 **78320 LE MESNIL SAINT-DENIS (FR)**

(74) Mandataire: **Valeo Systèmes Thermiques**
**Service Propriété Intellectuelle**
**ZA l'Agiot, 8 rue Louis Lormand**
**CS 80517**
**La Verrière**
**78322 Le Mesnil-Saint-Denis Cedex (FR)**

(56) Documents cités:
**EP-A1- 1 955 881      EP-A1- 3 306 214**
**WO-A1-2018/211200      FR-A1- 3 070 316**
**US-B1- 6 209 331**

**Description**

La présente invention concerne un procédé de gestion d'un dispositif de gestion thermique pour véhicule automobile.

Plus précisément, l'invention concerne un procédé de gestion pour un dispositif de gestion thermique comportant un circuit de fluide réfrigérant comprenant deux évaporateurs disposés en parallèle l'un de l'autre et comportant chacun un dispositif de détente du fluide réfrigérant dédié disposé en amont.

En règle générale, les deux évaporateurs sont dédiés au refroidissement d'éléments distincts comme par exemple un flux d'air interne à destination de l'habitacle du véhicule automobile pour un premier évaporateur et des éléments électroniques et/ou électriques tels que des batteries pour un deuxième évaporateur. Il peut néanmoins arriver, comme mentionné dans le document FR 3 070 316 A1, que lors d'une utilisation exclusive du deuxième évaporateur pour refroidir des éléments électroniques et/ou électriques tels que des batteries, la pression au sein du premier évaporateur peut s'élever ce qui peut éventuellement endommager ledit premier évaporateur. De plus, il est également possible du fait de la surchauffe du fluide réfrigérant en sortie du deuxième évaporateur que le fluide réfrigérant atteigne en sortie du compresseur une température trop élevée pouvant potentiellement endommager ledit compresseur.

Un des buts de la présente invention est donc de remédier au moins partiellement aux inconvénients de l'art antérieur et de proposer un procédé de gestion d'un dispositif de gestion thermique amélioré afin de préserver le premier évaporateur et le compresseur lors d'une utilisation exclusive du dispositif de gestion de thermique du deuxième évaporateur pour refroidir des éléments électroniques et/ou électriques tels que des batteries.

La présente invention concerne donc un procédé de gestion d'un dispositif de gestion thermique pour véhicule automobile comportant un circuit de fluide réfrigérant dans lequel est destiné à circuler un fluide réfrigérant, ledit circuit de fluide réfrigérant comportant :

- une boucle principale comportant, dans le sens de circulation du fluide réfrigérant, un compresseur, un condenseur configuré pour échanger de l'énergie calorifique avec un premier élément, un premier dispositif de détente et un premier évaporateur configuré pour échanger de l'énergie calorifique avec un deuxième élément,
- une branche de dérivation disposée en parallèle du premier dispositif de détente et du premier évaporateur, ladite branche de dérivation comportant un deuxième dispositif de détente et un deuxième évaporateur disposé en aval du deuxième dispositif de détente et configuré pour échanger de l'énergie calorifique avec un troisième élément,

ledit dispositif de gestion thermique fonctionnant dans un mode de refroidissement strict du troisième élément dans lequel le condenseur cède de l'énergie calorifique au premier élément et seul le deuxième évaporateur absorbe de l'énergie calorifique du troisième élément,
ledit procédé de gestion comportant une étape de gestion du diamètre d'ouverture du premier dispositif de détente en fonction de la température ambiante de sorte que du fluide réfrigérant circule au sein du premier évaporateur, le diamètre d'ouverture du premier dispositif de détente diminuant en fonction de l'augmentation de la température ambiante du premier élément.

De plus, selon l'invention,

- si la température ambiante est supérieure à 25°C, le diamètre d'ouverture du premier dispositif de détente est de l'ordre de 5 % de son diamètre d'ouverture maximum,
- si la température ambiante est inférieure ou égale à 25°C, le diamètre d'ouverture du premier dispositif de détente est de l'ordre de 20 % de son diamètre d'ouverture maximum.

Selon un autre aspect de l'invention, le procédé de gestion comporte une étape de gestion de la vitesse de rotation du compresseur de sorte que la température du troisième élément après échange thermique avec le deuxième évaporateur atteigne et maintienne une valeur consigne. Selon un autre aspect de l'invention, le procédé de gestion comporte une étape de gestion du diamètre d'ouverture du deuxième dispositif de détente en fonction de la différence entre la surchauffe du fluide réfrigérant en sortie du deuxième évaporateur et une surchauffe consigne. Selon un autre aspect de l'invention, le procédé de gestion comporte :

- une étape de détermination de la surchauffe maximum admissible du fluide réfrigérant en entrée du compresseur pour une température maximum consigne du fluide réfrigérant en sortie du compresseur,
- une étape de détermination de la surchauffe du fluide réfrigérant en entrée du compresseur,
- une étape de comparaison de la surchauffe du fluide réfrigérant en entrée du compresseur avec la surchauffe maximum admissible du fluide réfrigérant en entrée du compresseur déterminée,

si la surchauffe du fluide réfrigérant en entrée du compresseur est supérieure à la surchauffe maximum admissible du fluide réfrigérant en entrée du compresseur, le procédé de gestion comporte une étape d'abaissement de la surchauffe du fluide réfrigérant en entrée du compresseur jusqu'à ce que la surchauffe du fluide réfrigérant en entrée du compresseur soit inférieure ou égale à la surchauffe maximum admissible du fluide réfrigérant en entrée du compresseur.

Selon un autre aspect du procédé selon l'invention, le deuxième dispositif de détente est une vanne d'expansion électronique et l'étape d'abaissement de la surchauffe du fluide réfrigérant en entrée du compresseur est réalisée par ouverture dudit deuxième dispositif de détente. Selon un autre aspect du procédé selon l'invention, l'étape d'abaissement de la surchauffe du fluide réfrigérant en entrée du compresseur est réalisée par une ouverture du premier dispositif de détente de sorte que du fluide réfrigérant traverse le premier évaporateur.

Selon un autre aspect du procédé selon l'invention, l'étape d'abaissement de la surchauffe du fluide réfrigérant en entrée du compresseur est également réalisée par une diminution de la vitesse de rotation du compresseur.

Selon un exemple de réalisation :

- le condenseur est un échangeur de chaleur disposé conjointement sur la boucle principale et sur une boucle secondaire à l'intérieur de laquelle est destiné à circuler un fluide caloporteur et que le premier élément est ledit fluide caloporteur,
- le premier évaporateur est un échangeur de chaleur disposé au sein d'un dispositif de chauffage, ventilation et air conditionné et que le deuxième élément est un flux d'air interne à destination de l'habitacle,
- le deuxième évaporateur est configuré pour refroidir des éléments électriques et/ou électroniques tels que des batteries.

Selon un autre exemple, la boucle secondaire comporte :

- le premier échangeur de chaleur,
- une première conduite de circulation du fluide caloporteur comportant un cinquième échangeur interne destiné à être traversé par le flux d'air intérieur, la première conduite de circulation reliant un premier point de connexion disposé en aval du premier échangeur de chaleur et un deuxième point de connexion disposé en amont dudit premier échangeur de chaleur,
- une deuxième conduite de circulation du premier fluide caloporteur comportant un sixième échangeur de chaleur destiné à être traversé par un flux d'air externe, la deuxième conduite de circulation reliant également le premier point de connexion disposé en aval du premier échangeur de chaleur et le deuxième point de connexion disposé en amont dudit premier échangeur de chaleur, et
- une pompe disposée en aval ou en amont du premier échangeur de chaleur, entre le premier point de connexion et le deuxième point de connexion.

D'autres caractéristiques et avantages de la présente invention apparaîtront plus clairement à la lecture de la description suivante, fournie à titre illustratif et non limitatif, et des dessins annexés dans lesquels :

La figure 1 montre une représentation schématique d'un dispositif de gestion thermique selon un premier mode de réalisation,
La figure 2 montre une représentation schématique d'un dispositif de gestion thermique selon un deuxième mode de réalisation,
La figure 3 montre une représentation schématique de la boucle secondaire selon un mode de réalisation alternatif,
La figure 4 montre une représentation schématique d'un dispositif de chauffage, ventilation et/ou climatisation,
La figure 5 montre un organigramme des étapes du procédé de gestion thermique.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou inter-changées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches, mais non identiques. Cette indexation n'implique pas une priorité d'un élément, paramètre ou critère par rapport à un autre et on peut aisément inter-changer de telles dénominations sans sortir du cadre de la présente description. Cette indexation n'implique pas non plus un ordre dans le temps par exemple pour apprécier tel ou tel critère.

Dans la présente description, on entend par « placé en amont » qu'un élément est placé avant un autre par rapport au sens de circulation d'un fluide. A contrario, on entend par « placé en aval » qu'un élément est placé après un autre par rapport au sens de circulation du fluide.

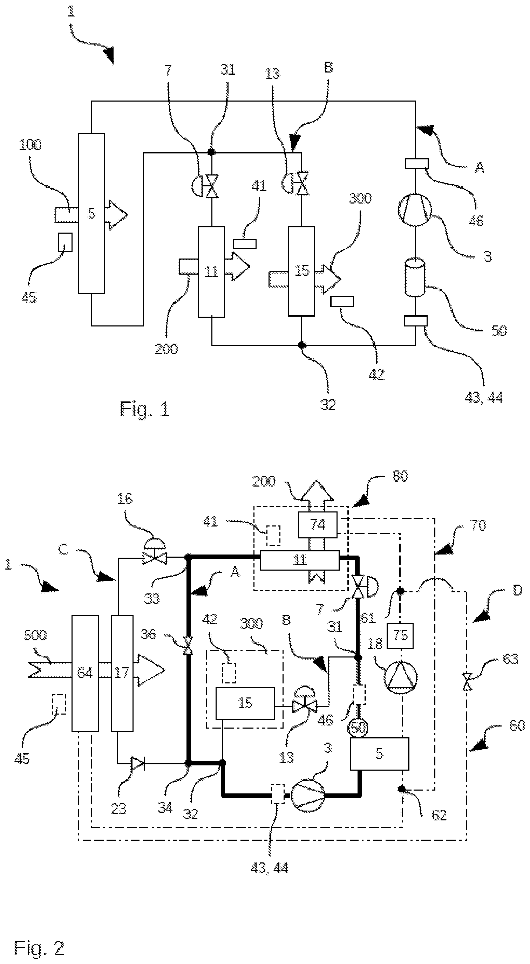

La figure 1 montre une représentation schématique d'un dispositif de gestion thermique 1 pour véhicule automobile selon un mode de réalisation simple. Le dispositif de gestion thermique 1 comporte un circuit de fluide réfrigérant dans lequel est destiné à circuler un fluide réfrigérant. Ce circuit de fluide réfrigérant comporte une boucle principale A comportant, dans le sens de circulation du fluide réfrigérant, un compresseur 3, un condenseur 5 configuré pour échanger de l'énergie calorifique avec un premier élément 100, un premier dispositif de détente 7 et un premier évaporateur 11. Ce premier évaporateur 11 est plus particulièrement configuré pour échanger de l'énergie calorifique avec un deuxième élément 200.

La boucle principale A peut également comporter un dispositif de séparation de phase 50 disposé en amont du compresseur 3.

Le circuit de fluide réfrigérant comporte également une branche de dérivation B disposée en parallèle du premier dispositif de détente 7 et du premier évaporateur 11. Cette branche de dérivation B comporte un deuxième dispositif de détente 13 et un deuxième évaporateur 15 disposé en aval du deuxième dispositif de détente 13. Le deuxième évaporateur 15 est plus particulièrement configuré pour échanger de l'énergie calorifique avec un troisième élément 300.

Plus précisément, la branche de dérivation B relie un premier 31 et un deuxième 32 point de raccordement avec la boucle principale A. Le premier point de raccordement 31 est disposé en amont du premier dispositif de détente 7, entre le condenseur 5 et ledit premier dispositif de détente 7. Le deuxième point de raccordement 32 est quant à lui disposé en aval du premier évaporateur 11, entre ledit premier évaporateur 11 et le compresseur 3.

Par condenseur 5, premier 11 et deuxième 15 évaporateur, on entend par ici un échangeur de chaleur défini par sa fonction. Un condenseur aura alors comme fonction de réchauffer l'élément avec lequel il échange de l'énergie calorifique et un évaporateur aura comme fonction de refroidir l'élément avec lequel il échange de l'énergie calorifique.

Comme illustré sur la figure 1, les premier 100, deuxième 200 et troisième 300 éléments avec lesquels échangent respectivement le condenseur 5 et les premier 11 et deuxième 15 évaporateurs, peuvent être des flux d'air traversant lesdits échangeurs de chaleur. Cependant, selon le type d'échangeur de chaleur il n'est bien sûr pas exclu que les premier 100, deuxième 200 et troisième 300 éléments soient d'autres types, comme par exemple un fluide caloporteur ou un élément en contact direct avec l'évaporateur comme par exemple des batteries. Le condenseur 5 et les premier 11 et deuxième 15 évaporateurs peuvent ainsi par exemple être des échangeurs de chaleur à air lorsque les premier 100, deuxième 200 et troisième 300 éléments sont des flux d'air, des échangeurs de types échangeurs en plaque lorsqu'ils sont au contact direct des premier 100, deuxième 200 et troisième 300 éléments ou encore des échangeurs de chaleur bifluide lorsque les premier 100, deuxième 200 et troisième 300 éléments sont des fluides caloporteur circulant dans un circuit de gestion thermique annexe.

La figure 2 montre quant à elle un exemple de dispositif de régulation thermique 1 plus complexe. Dans cet exemple, le dispositif de gestion thermique 1 est inversible, c'est à dire qu'il peut aussi bien refroidir que chauffer ici un flux d'air interne 200 à destination de l'habitacle.

Le dispositif de gestion thermique 1 de la figure 2 comporte ainsi également un circuit de fluide réfrigérant dans lequel est destiné à circuler un fluide réfrigérant. Ce circuit de fluide réfrigérant comporte une boucle principale A ainsi qu'une boucle secondaire D dans laquelle est destinée à circuler un fluide caloporteur.

La boucle principale A comporte, dans le sens de circulation du fluide réfrigérant, un compresseur 3, un premier échangeur de chaleur 5, un premier dispositif de détente 7 et un deuxième échangeur de chaleur 11.

La boucle principale A comporte également une branche de dérivation B disposée en parallèle du premier dispositif de détente 7 et du premier évaporateur 11. Cette branche de dérivation B comporte un deuxième dispositif de détente 13 et un troisième échangeur de chaleur 15 disposé en aval du deuxième dispositif de détente 13.

Plus précisément, la branche de dérivation B relie un premier 31 et un deuxième 32 point de raccordement avec la boucle principale A. Le premier point de raccordement 31 est disposé en amont du premier dispositif de détente 7, entre le premier échangeur de chaleur 5 et ledit premier dispositif de détente 7. Le deuxième point de raccordement 32 est quant à lui disposé en aval du deuxième échangeur de chaleur 11, entre ledit deuxième échangeur de chaleur 11 et le compresseur 3.

Le premier échangeur de chaleur 5 est ici un condenseur disposé conjointement sur la boucle principale A et sur la boucle secondaire D afin de permettre les échanges d'énergie calorifique entre le fluide réfrigérant de la boucle principale A et le fluide caloporteur de la boucle secondaire d qui joue ainsi le rôle de premier élément 100.

Le deuxième échangeur de chaleur 11 est ici un premier évaporateur par exemple disposé au sein d'un dispositif de chauffage, ventilation et/ou climatisation 80, également appelé HVAC.

Ce deuxième échangeur de chaleur 11 est destiné à échanger ici avec un flux d'air interne à destination de l'habitacle qui joue le rôle du deuxième élément 200.

Le troisième échangeur de chaleur 15 est quant à lui un deuxième évaporateur configuré pour échanger de l'énergie calorifique et plus particulièrement refroidir par un contact direct des éléments électroniques et/ou électriques tels que des batteries.

La boucle principale A peut également comporter une branche de contournement C. Cette branche de contournement C peut relier plus spécifiquement un troisième point de raccordement 33 et un quatrième point de raccordement 34 disposés sur ladite boucle principale A.

Le troisième point de raccordement 31 est de préférence disposé, dans le sens de circulation du fluide réfrigérant, en aval du deuxième échangeur de chaleur 11, entre ledit deuxième échangeur de chaleur 11 et le compresseur 3. Plus particulièrement, et comme illustré sur la figure 2, le troisième point de raccordement 33 est disposé entre le deuxième échangeur de chaleur 11 et le deuxième point de raccordement 32 de la branche de dérivation B. Le quatrième point de raccordement 34 est quant à lui de préférence disposé en aval du troisième point de raccordement 33, entre ledit troisième point de raccordement 33 et le compresseur 3, de préférence en amont du deuxième point de raccordement 32 de la branche de dérivation B.

Cette branche de contournement C comporte un troisième dispositif de détente 16 disposé en amont d'un quatrième échangeur de chaleur 17. Ce quatrième échangeur de chaleur 17 peut par exemple être un troisième évaporateur disposé en face avant du véhicule automobile afin d'échanger de l'énergie calorifique avec un flux d'air externe 500.

La branche de contournement C peut également comporter un clapet antiretour 23 disposé en aval du quatrième échangeur de chaleur 17 afin d'éviter que du fluide réfrigérant issu du quatrième point de raccordement 34 ne reflux vers le quatrième échangeur de chaleur 17.

Afin de contrôler le passage du fluide réfrigérant au sein de la branche de contournement C ou non, la branche principale comporte un dispositif de redirection du fluide réfrigérant en provenance du deuxième échangeur de chaleur 11 vers ladite branche de contournement C ou bien directement vers le compresseur 3. Ce dispositif de redirection du fluide réfrigérant peut notamment comporter une vanne d'arrêt 36 disposée sur la branche principale A entre le troisième 33 et le quatrième 34 point de raccordement. Cette vanne d'arrêt 36 peut être une vanne tout-ou-rien ou bien encore une vanne proportionnelle dont l'amplitude d'ouverture est commandée. Pour que le fluide réfrigérant ne traverse pas le quatrième échangeur de chaleur 17, le troisième dispositif de détente 16 peut notamment comporter une fonction d'arrêt, c'est-à-dire qu'il est configuré pour bloquer le flux de fluide réfrigérant lorsqu'il est fermé. Une alternative peut être de disposer une vanne d'arrêt entre le troisième dispositif de détente 16 et le troisième point de raccordement 33.

Une autre alternative (non représentée) peut également être de disposer une vanne trois-voies au niveau du troisième point de raccordement 33.

Par vanne d'arrêt, clapet antiretour, vanne trois-voies ou dispositif de détente avec fonction d'arrêt, on entend ici des éléments mécaniques ou électromécaniques pouvant être pilotés par une unité de commande électronique embarquée dans le véhicule automobile.

La boucle principale A peut également comporter, en sus d'un dispositif de séparation de phase, une bouteille déshydratante 50 disposée en aval du premier échangeur de chaleur 5, plus précisément entre ledit premier échangeur de chaleur 5 et le premier dispositif de détente 7. Une telle bouteille déshydratante 50 disposée sur le côté haute pression du circuit de climatisation, c'est à dire en aval du compresseur 3 et en amont d'un dispositif de détente, a un encombrement moindre ainsi qu'un coût réduit par rapport à d'autres solutions de séparation de phase comme un accumulateur qui serait disposé du côté basse pression du circuit de climatisation, c'est à dire en amont du compresseur 3.

Le premier dispositif de détente 7 peut être par exemple une vanne d'expansion électronique, c'est à dire dont la pression du fluide réfrigérant en sortie est contrôlée par un actionneur qui fixe la section d'ouverture du dispositif de détente, fixant ainsi la pression du fluide en sortie. Une telle vanne d'expansion électronique est notamment configurée pour laisser passer le fluide réfrigérant sans perte de pression lorsque ledit dispositif de détente est ouvert complètement.

A l'instar du troisième dispositif de détente 16, le deuxième dispositif de détente 13 peut comporter une fonction d'arrêt afin de permettre ou non au fluide réfrigérant de traverser la branche de dérivation B. Une alternative est de disposer une vanne d'arrêt sur la branche de dérivation B, en amont du deuxième dispositif de détente 13. Ce deuxième dispositif de détente 13 peut être une vanne d'expansion électronique pilotée par l'unité centrale de contrôle 90 ou encore une vanne d'expansion thermostatique ou un orifice tube.

Le troisième dispositif de détente 16 peut également être une vanne d'expansion électronique.

La boucle secondaire D peut comporter quant à elle le premier échangeur de chaleur 5 et une première conduite de circulation 70 du fluide caloporteur comportant un cinquième échangeur interne 74 appelé également radiateur interne et destiné à être traversé par le flux d'air intérieur 200. Ce cinquième échangeur de chaleur 74 est notamment disposé dans le dispositif de chauffage, ventilation et/ou climatisation 80. Plus précisément, le cinquième échangeur de chaleur 74 est disposé en aval du deuxième échangeur de chaleur 11 dans le sens de circulation du flux d'air interne 200. Cette première conduite de circulation 70 relie un premier point de connexion 61 disposé en aval du premier échangeur de chaleur 5 et un deuxième point de connexion 62 disposé en amont dudit premier échangeur de chaleur 5.

La boucle secondaire D peut comporter également une deuxième conduite de circulation 60 du premier fluide caloporteur comportant un sixième échangeur de chaleur 64 également appelé radiateur externe et destiné à être traversé par un flux d'air externe 500 par exemple en face avant du véhicule automobile. Le sixième échangeur de chaleur 64 est notamment disposé en amont du troisième échangeur de chaleur 17 dans le sens de circulation du flux d'air externe 500. Cette deuxième conduite de circulation 60 relie également le premier point de connexion 61 disposé en aval du premier échangeur de chaleur 5 et le deuxième point de connexion 62 disposé en amont dudit premier échangeur de chaleur 5.

La boucle secondaire D comporte en outre une pompe 18 disposée en aval ou en amont du premier échangeur de chaleur 5, entre le premier point de connexion 61 et le deuxième point de connexion 62.

La boucle secondaire D peut également comporter un dispositif de redirection du fluide caloporteur en provenance du premier échangeur de chaleur 5 vers la première conduite de circulation 70 et/ou vers la deuxième conduite de circulation 60.

Comme illustré sur la figure 2, ledit dispositif de redirection du fluide caloporteur en provenance du premier échangeur de chaleur 5 peut notamment comporter une vanne d'arrêt 63 disposée sur la deuxième conduite de circulation 60 afin de bloquer ou non le fluide caloporteur et ainsi l'empêcher de circuler dans ladite deuxième conduite de circulation 60. Ce mode de réalisation permet notamment de limiter le nombre de vannes sur la boucle secondaire D et permet ainsi de limiter les coûts de production.

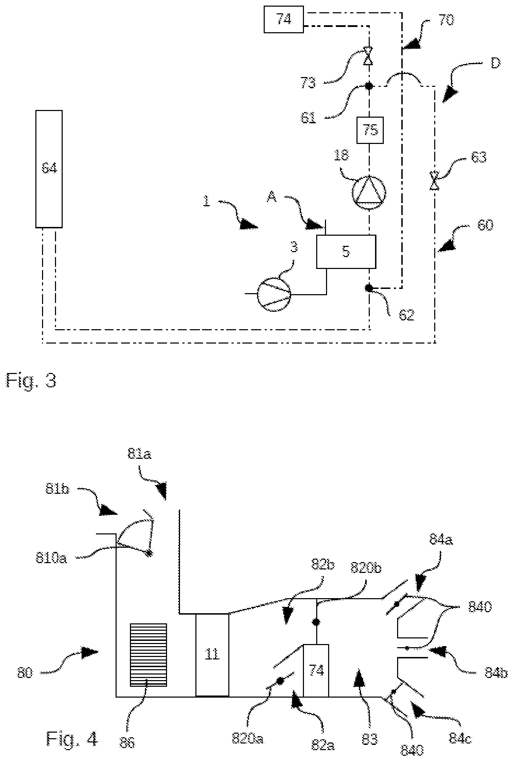

Selon un mode de réalisation alternatif illustré à la figure 3, représentant la boucle secondaire D , le dispositif de redirection du fluide caloporteur en provenance du premier échangeur de chaleur 5 peut notamment comporter :

- une vanne d'arrêt 63 disposée sur la deuxième conduite de circulation 60 afin de bloquer ou non le premier fluide caloporteur et afin de l'empêcher de circuler dans ladite deuxième conduite de circulation 60, et
- une autre vanne d'arrêt 73 disposée sur la première conduite de circulation 70 afin de bloquer ou non le fluide caloporteur et l'empêcher de circuler dans ladite première conduite de circulation 70.

La boucle secondaire D peut également comporter un élément électrique chauffant 75 du fluide caloporteur. Ledit élément électrique chauffant 75 est notamment disposé, dans le sens de circulation du fluide caloporteur, en aval du premier échangeur de chaleur 5, entre ledit premier échangeur de chaleur 5 et le premier premier point de connexion 61.

Comme décrit plus haut, le cinquième 74 et le deuxième 11 échangeur de chaleur sont disposés au sein d'un dispositif de chauffage, ventilation et/ou climatisation 80. Comme illustré à la figure 4, le dispositif de chauffage, ventilation et/ou climatisation 80 peut comporter une conduite d'alimentation 81a en air extérieur et une conduite d'alimentation 81b en air recirculé (c'est-à-dire qui provient de l'habitacle). Ces deux conduites d'alimentation 81a et 81b amènent toutes deux l'air au niveau du deuxième échangeur de chaleur 11 afin qu'il le traverse. Afin de choisir d'où l'air traversant le deuxième échangeur de chaleur 11 provient, le dispositif de chauffage, ventilation et/ou climatisation 80 comporte une volet d'obturation 810a, par exemple un volet de type tambour, configuré pour refermer totalement ou partiellement la conduite d'alimentation 81a en air extérieur ou la conduite d'alimentation 81b en air recirculé.

En son sein, le dispositif de chauffage, ventilation et/ou climatisation 80 comporte une conduite de chauffage 82a qui permet d'amener de l'air étant passé par le deuxième échangeur de chaleur 11, au niveau du cinquième échangeur de chaleur 74 afin qu'il le traverse et soit réchauffé avant d'arriver dans une chambre de distribution 83. Cette conduite de chauffage 82a comporte également un volet d'obturation 820a configuré pour la refermer totalement ou partiellement.

Le dispositif de chauffage, ventilation et/ou climatisation 80 peut comporter également une conduite de contournement 82b du cinquième échangeur de chaleur 74. Cette conduite de contournement 82b permet à l'air étant passé par le deuxième échangeur de chaleur 11, d'aller directement dans la chambre de distribution 83, sans passer par le cinquième échangeur de chaleur 74. Cette conduite de contournement 82b comporte également un volet d'obturation 820b configuré pour refermer totalement ou partiellement.

Au niveau de la chambre de distribution 83 l'air peut être envoyé vers le pare-brise par une conduite supérieure 84a, le tableau de bord de l'habitacle par une conduite médiane 84b et/ou vers le bas du tableau de bord de l'habitacle par une conduite inférieure 84c. Chacune de ces conduites 84a, 84b, 84c comportant un volet d'obturation 840 configuré pour les refermer totalement ou partiellement.

Le dispositif de chauffage, ventilation et/ou climatisation 80 comporte également un pulseur 86 afin de propulser le flux d'air interne 200. Ce pulseur 86 peut être disposé en amont du deuxième échangeur de chaleur 11 selon le sens de circulation du flux d'air intérieur 200.

Comme illustré aux figures 1 et 2, le dispositif de gestion thermique 1 peut également comporter différents capteurs afin de mesurer et déterminer certains paramètres.

Le dispositif de gestion thermique 1 peut ainsi comporter un premier capteur de température 41 configuré pour mesurer la température du deuxième élément 200 après qu'il ait échangé de l'énergie calorifique avec le premier évaporateur 11. Il peut ainsi s'agir par exemple d'un capteur de température 41 disposé en aval du premier évaporateur 11 dans le sens de circulation d'un flux d'air interne 200.

Le dispositif de gestion thermique 1 peut comporter un deuxième capteur de température 42 configuré pour mesurer la température du troisième élément 300 après qu'il ait échangé de l'énergie calorifique avec le deuxième évaporateur 15. Il peut ainsi s'agir par exemple d'un capteur de température 42 mesurant la température des éléments électroniques et/ou électriques tels que des batteries.

Le dispositif de gestion thermique 1 peut comporter un troisième capteur de température 43 configuré pour mesurer la température du fluide réfrigérant avant son entrée dans le compresseur 3 et un quatrième capteur de pression 44 pour mesurer la pression du fluide réfrigérant avant son entrée dans le compresseur 3. Ces deux capteurs 43 et 44 peuvent être notamment réunis au sein d'un même dispositif disposé en amont du compresseur 3, entre le deuxième point de raccordement 32 et ledit compresseur 3.

Le dispositif de gestion thermique 1 peut également comporter un cinquième capteur 45 de la température ambiante. Par température ambiante, on entend ici la température extérieure au véhicule automobile. Ce cinquième capteur 45 peut ainsi être disposé à l'extérieur du véhicule automobile par exemple en amont du sixième échangeur de chaleur 64 dans le sens de circulation du flux d'air externe 100 ou 500.

Le dispositif de gestion thermique 1 peut enfin comporter un sixième capteur 46 de la pression du fluide réfrigérant en sortie du compresseur 3. Ce sixième capteur de pression 46 peut être disposé en aval du compresseur 3, comme illustré sur la figure 1, ou alors disposé en aval du premier échangeur de chaleur 5, comme illustré sur la figure 2.

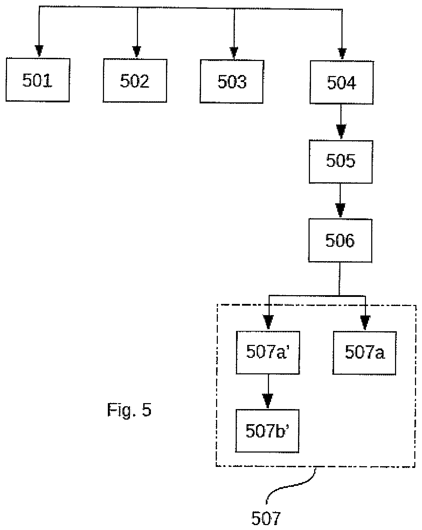

La figure 5 montre un diagramme des différentes étapes du procédé de gestion selon l'invention.

Lorsque le dispositif de gestion thermique 1 fonctionne dans un mode de refroidissement strict du troisième élément 300 dans lequel le condenseur 5 cède de l'énergie calorifique au premier élément 100 et seul le deuxième évaporateur 15 absorbe de l'énergie calorifique du troisième élément 300, le procédé de gestion comporte une première étape 501 de gestion du diamètre d'ouverture du premier dispositif de détente 7.

Dans cette première étape 501, le diamètre d'ouverture du premier dispositif de détente 7 est réalisée en fonction de la température ambiante de sorte que du fluide réfrigérant circule au sein du premier évaporateur 11. La température ambiante peut notamment être mesurée par le cinquième capteur 45 de température.

Durant cette première étape 501, le diamètre d'ouverture du premier dispositif de détente 7 est notamment géré de sorte qu'il diminue en fonction de l'augmentation de la température ambiante. Ainsi, du fluide réfrigérant passe malgré tout dans le premier évaporateur 11 ce qui évite que du fluide réfrigérant ne reste stagnant au sein dudit premier évaporateur 11. De plus, la pression du fluide réfrigérant traversant le premier évaporateur 11 est réduite du fait que le fluide réfrigérant ait traversé le premier dispositif de détente 7. Ainsi les risques de détérioration du premier évaporateur 11 du fait d'une pression trop élevée du fluide réfrigérant à son niveau sont limités.

En effet, plus la température ambiante est élevée, plus la pression du fluide réfrigérant en sortie du compresseur 3 augmente afin de compenser cette température ambiante élevée. Le fait de diminuer le diamètre d'ouverture du premier dispositif de détente 7 induit alors une perte de pression plus importante et donc le fluide réfrigérant traversant le première évaporateur 11 est à une pression moindre ce qui permet une meilleure préservation du premier évaporateur 11.

Selon l'invention, si la température ambiante est supérieure à 25°C, le diamètre d'ouverture du premier dispositif de détente 7 est de l'ordre de 5 % de son diamètre d'ouverture maximum.

Si la température ambiante est inférieure ou égale à 25°C, le diamètre d'ouverture du premier dispositif de détente 7 est de l'ordre de 20 % de son diamètre d'ouverture maximum.

Le procédé de gestion peut également comporter une deuxième étape 502 de gestion de la vitesse de rotation du compresseur 3 de sorte que la température du troisième élément 300, après échange thermique avec le deuxième évaporateur 15, atteigne et maintienne une valeur consigne. La température du troisième élément 300 peut notamment être mesurée par le deuxième capteur 42 de température. La valeur consigne de température du troisième élément 300 peut notamment être définie selon différents paramètres comme par exemple les préconisations constructeurs ou la température optimale de fonctionnement du troisième élément 300 notamment lorsqu'il s'agit d'éléments électroniques et/ou électriques tels que des batteries. Cette deuxième étape 502 peut être réalisée avant, simultanément ou après la première étape 501.

Le procédé de gestion peut comporter, avant, simultanément ou après les première 501 et deuxième 502 étapes, une troisième étape 503 de gestion du diamètre d'ouverture du deuxième dispositif de détente 13 en fonction de la différence entre la surchauffe du fluide réfrigérant en sortie du deuxième évaporateur 15 et une surchauffe consigne. Cette surchauffe consigne peut par exemple être comprise entre de 3 à 10°C, de préférence entre 5 et 8°C.

Le procédé de gestion peut comporter, avant, simultanément ou après les première 501, deuxième 502 et troisième 503 étapes, une quatrième étape 504 de détermination de la surchauffe maximum admissible du fluide réfrigérant en entrée du compresseur 3 (SHR_comp_in_max) pour une température maximum consigne du fluide réfrigérant en sortie du compresseur 3 (TR_comp_out_sp).

Par exemple, la température maximum consigne du fluide réfrigérant en sortie du compresseur 3 (TR_comp_out_sp) peut être de 130°C. Cette température est une valeur définie par le modèle du compresseur 3 et ses spécifications et/ou par les préconisations du constructeur automobile. Cette température correspond généralement à une température au-delà de laquelle le compresseur 3 peut être endommagé ou ne plus fonctionner correctement. La pression du fluide réfrigérant en sortie dudit compresseur 3 (PR_comp_out) est quant à elle une valeur connue. Elle peut par exemple être mesurée par le sixième capteur 46 de pression du fluide réfrigérant en sortie du compresseur 3.

La surchauffe maximale admissible en entrée du compresseur 3 (SHR_comp_in_max) peut être déterminée à partir de tables de correspondances prenant en compte la pression du fluide réfrigérant en sortie du compresseur 3 (PR_comp_out), la température maximale admissible du fluide réfrigérant en sortie de compresseur 3 (TR_comp_out_sp) et la pression du fluide réfrigérant en entrée du compresseur 3 (PR_comp_in). La pression du fluide réfrigérant en entrée du compresseur 3 (PR_comp_in) est notamment obtenue par mesure avec le quatrième 44 capteur de pression.

Suite à la quatrième étape 504, le procédé de gestion peut comporter une cinquième étape 505 de détermination de la surchauffe du fluide réfrigérant en entrée du compresseur 3

(SHR_comp_in). Cette quatrième étape 504 est notamment réalisée selon la formule suivante :

$$\text{SHR\_comp\_in} = \text{TR\_comp\_in} - \text{Tsat}(\text{PR\_comp\_in})$$

avec TR_comp_in la température du fluide réfrigérant en entrée du compresseur 3 et Tsat(PR_comp_in) la température de saturation du fluide réfrigérant à la pression en entrée du compresseur 3. Ces deux paramètres de pression et de température sont notamment obtenus par mesure avec le troisième capteur 43 de température et le quatrième 44 capteur de pression.

Suite à la cinquième étape 505, le procédé de gestion peut comporter une sixième étape 506 de comparaison de la surchauffe du fluide réfrigérant en entrée du compresseur 3 (SHR_comp_in) avec la surchauffe maximum admissible du fluide réfrigérant en entrée du compresseur 3 (SHR_comp_in_max) déterminée.

Si la surchauffe du fluide réfrigérant en entrée du compresseur 3 (SHR_comp_in) est supérieure à la surchauffe maximum admissible du fluide réfrigérant en entrée du compresseur 3 (SHR_comp_in_max), le procédé de gestion comporte une septième étape 507 d'abaissement de la surchauffe du fluide réfrigérant en entrée du compresseur 3 (SHR_comp_in) jusqu'à ce que la surchauffe du fluide réfrigérant en entrée du compresseur 3 (SHR_comp_in) soit inférieure ou égale à la surchauffe maximum admissible du fluide réfrigérant en entrée du compresseur 3 (SHR_comp_in_max).

Selon un premier mode de réalisation dans lequel le deuxième dispositif de détente 13 est une vanne d'expansion électronique, la septième étape 507 d'abaissement de la surchauffe du fluide réfrigérant en entrée du compresseur 3 (SHR_comp_in) est réalisée lors d'une première étape intermédiaire 507a d'ouverture du deuxième dispositif de détente 13. Cette ouverture du deuxième dispositif de détente 13 va entraîner une diminution de la perte de pression du fluide réfrigérant lorsqu'il traverse ledit deuxième dispositif de détente 13. Cette diminution de la perte de pression du fluide réfrigérant va ainsi entraîner une diminution de la surchauffe du fluide réfrigérant. Cela permet également d'éviter que du fluide réfrigérant reste stagnant dans le deuxième évaporateur 15. De ce fait la surchauffe du fluide réfrigérant en entrée du compresseur 3 (SHR_comp_in) diminue et donc également la température du fluide réfrigérant en sortie du compresseur 3.

Selon un deuxième mode de réalisation la septième étape 507 d'abaissement de la surchauffe du fluide réfrigérant en entrée du compresseur 3 est réalisée lors une deuxième étape intermédiaire 507a' d'ouverture du premier dispositif de détente 7 de sorte que du fluide réfrigérant traverse le premier évaporateur 11. Cette deuxième étape intermédiaire 507a' permet de faire circuler du fluide réfrigérant au sein du premier évaporateur 11 et ainsi de mélanger un fluide réfrigérant plus froid en provenance dudit premier évaporateur 11 avec le fluide réfrigérant surchauffé issu du deuxième évaporateur 15. De ce fait la surchauffe du fluide réfrigérant en entrée du compresseur 3 (SHR_comp_in) diminue et donc également la température du fluide réfrigérant en sortie du compresseur 3.

L'ouverture du premier dispositif de détente 7 est de préférence inférieure à une valeur limite au-delà de laquelle le fluide réfrigérant à haute pression, c'est à dire le fluide réfrigérant entre le compresseur 3 et les premier 7 et deuxième 13 dispositifs de détente, ne subit pas une perte de pression pouvant nuire aux performances du dispositif de gestion thermique 1.

Toujours selon ce deuxième mode de réalisation, si l'ouverture du premier dispositif de détente 7 n'est pas suffisante, la septième étape 507 d'abaissement de la surchauffe du fluide réfrigérant en entrée du compresseur 3 peut comprendre également une troisième étape intermédiaire 507b' dans laquelle la vitesse de rotation du compresseur 3 est diminuée. Cette diminution de la vitesse de rotation du compresseur 3 entraîne une diminution de la température du fluide réfrigérant en sortie du deuxième évaporateur 15. De ce fait, la température du fluide réfrigérant en entrée et en sortie du compresseur 3 diminue également.

Ce second mode de réalisation de la septième étape 507 est particulièrement adapté lorsque le deuxième dispositif de détente 13 est une vanne d'expansion thermostatique ou un orifice tube pour lesquels le premier mode de réalisation de la septième étape 507 ne peut pas être mis en oeuvre.

Ainsi on voit bien que le procédé de gestion selon l'invention permet tout d'abord une protection du premier évaporateur 11 lorsque le dispositif de gestion thermique 1 fonctionne dans un mode de refroidissement strict du troisième élément 300. De plus, toujours dans ce mode de fonctionnement, le procédé de gestion peut permettre une protection du compresseur 3 contre des températures élevées du fluide réfrigérant qui pourraient le détériorer.

8

**EP 3 990 299 B1**

**Revendications**

1. Procédé de gestion d'un dispositif de gestion thermique (1) pour véhicule automobile comportant un circuit de fluide réfrigérant dans lequel est destiné à circuler un fluide réfrigérant, ledit circuit de fluide réfrigérant comportant :

   - une boucle principale (A) comportant, dans le sens de circulation du fluide réfrigérant, un compresseur (3), un condenseur (5) configuré pour échanger de l'énergie calorifique avec un premier élément (100), un premier dispositif de détente (7) et un premier évaporateur (11) configuré pour échanger de l'énergie calorifique avec un deuxième élément (200),
   - une branche de dérivation (B) disposée en parallèle du premier dispositif de détente (7) et du premier évaporateur (11), ladite branche de dérivation (B) comportant un deuxième dispositif de détente (13) et un deuxième évaporateur (15) disposé en aval du deuxième dispositif de détente (13) et configuré pour échanger de l'énergie calorifique avec un troisième élément (300),
   ledit dispositif de gestion thermique (1) fonctionnant dans un mode de refroidissement strict du troisième élément (300) dans lequel le condenseur (5) cède de l'énergie calorifique au premier élément (100) et seul le deuxième évaporateur (15) absorbe de l'énergie calorifique du troisième élément (300),
   ledit procédé de gestion comportant une étape de gestion du diamètre d'ouverture du premier dispositif de détente (7) en fonction de la température ambiante de sorte que du fluide réfrigérant circule au sein du premier évaporateur (11), le diamètre d'ouverture du premier dispositif de détente (7) diminuant en fonction de l'augmentation de la température ambiante du premier élément (100), ledit procédé de gestion étant **caractérisé en ce que** :

   - si la température ambiante est supérieure à 25°C, le diamètre d'ouverture du premier dispositif de détente (7) est de l'ordre de 5 % de son diamètre d'ouverture maximum,
   - si la température ambiante est inférieure ou égale à 25°C, le diamètre d'ouverture du premier dispositif de détente (7) est de l'ordre de 20 % de son diamètre d'ouverture maximum.

2. Procédé de gestion selon la revendication précédente, **caractérisé en ce qu'**il comporte une étape de gestion de la vitesse de rotation du compresseur (3) de sorte que la température du troisième élément (300) après échange thermique avec le deuxième évaporateur (15) atteigne et maintienne une valeur consigne.

3. Procédé de gestion selon l'une quelconque des revendications précédentes, **caractérisé en ce qu'**il comporte une étape de gestion du diamètre d'ouverture du deuxième dispositif de détente (13) en fonction de la différence entre la surchauffe du fluide réfrigérant en sortie du deuxième évaporateur (15) et une surchauffe consigne.

4. Procédé de gestion selon l'une quelconque des revendications précédentes, **caractérisé en ce qu'**il comporte :

   - une étape de détermination de la surchauffe maximum admissible du fluide réfrigérant en entrée du compresseur (3) pour une température maximum consigne du fluide réfrigérant en sortie du compresseur (3),
   - une étape de détermination de la surchauffe du fluide réfrigérant en entrée du compresseur (3),
   - une étape de comparaison de la surchauffe du fluide réfrigérant en entrée du compresseur (3) avec la surchauffe maximum admissible du fluide réfrigérant en entrée du compresseur (3) déterminée,

   si la surchauffe du fluide réfrigérant en entrée du compresseur (3) est supérieure à la surchauffe maximum admissible du fluide réfrigérant en entrée du compresseur (3), le procédé de gestion comporte une étape d'abaissement de la surchauffe du fluide réfrigérant en entrée du compresseur (3) jusqu'à ce que la surchauffe du fluide réfrigérant en entrée du compresseur (3) soit inférieure ou égale à la surchauffe maximum admissible du fluide réfrigérant en entrée du compresseur (3).

5. Procédé de gestion selon la revendication 4, **caractérisé en ce que** le deuxième dispositif de détente (13) est une vanne d'expansion électronique et que l'étape d'abaissement de la surchauffe du fluide réfrigérant en entrée du compresseur (3) est réalisée par ouverture dudit deuxième dispositif de détente (13).

6. Procédé de gestion selon la revendication 4, **caractérisé en ce que** l'étape d'abaissement de la surchauffe du fluide réfrigérant en entrée du compresseur (3) est réalisée par une ouverture du premier dispositif de détente (7) de sorte que du fluide réfrigérant traverse le premier évaporateur (11).

7. Procédé de gestion selon la revendication précédente, **caractérisé en ce que** l'étape d'abaissement de la surchauffe du fluide réfrigérant en entrée du compresseur (3) est également réalisée par une diminution de la vitesse de rotation du compresseur (3).

**Patentansprüche**

1. Verfahren zur Steuerung einer Wärmesteuervorrichtung (1) für ein Kraftfahrzeug, die einen Kältemittelkreislauf zur Zirkulation eines Kältemittels umfasst, wobei der Kältemittelkreislauf Folgendes umfasst:

   - eine Hauptschleife (A), die in Strömungsrichtung des Kältemittels Folgendes umfasst: einen Kompressor (3), einen Kondensator (5), der dazu konfiguriert ist, Wärmeenergie mit einem ersten Element (100) auszutauschen, eine erste Entspannungsvorrichtung (7) und einen ersten Verdampfer (11), der dazu konfiguriert ist, Wärmeenergie mit einem zweiten Element (200) auszutauschen,
   - eine Umführung (B), die parallel zu der ersten Entspannungsvorrichtung (7) und dem ersten Verdampfer (11) angeordnet ist, wobei die Umführung (B) eine zweite Entspannungsvorrichtung (13) und einen zweiten Verdampfer (15), der stromabwärts der zweiten Entspannungsvorrichtung (13) angeordnet und dazu konfiguriert ist, Wärmeenergie mit einem dritten Element (300) auszutauschen, umfasst,
   wobei die Wärmesteuervorrichtung (1) in einem strikten Kühlmodus des dritten Elements (300) arbeitet, in welchem der Kondensator (5) Wärmeenergie an das erste Element (100) abgibt und nur der zweite Verdampfer (15) Wärmeenergie von dem dritten Element (300) aufnimmt,
   wobei das Steuerverfahren einen Schritt des Steuerns des Öffnungsdurchmessers der ersten Entspannungsvorrichtung (7) in Abhängigkeit von der Umgebungstemperatur umfasst, sodass Kältemittel innerhalb des ersten Verdampfers (11) zirkuliert, wobei sich der Öffnungsdurchmesser der ersten Entspannungsvorrichtung (7) mit der Erhöhung der Umgebungstemperatur des ersten Elements (100) verringert, wobei das Steuerverfahren **dadurch gekennzeichnet ist, dass**:

      - wenn die Umgebungstemperatur höher als 25 °C ist, der Öffnungsdurchmesser der ersten Entspannungsvorrichtung (7) in der Größenordnung von 5 % ihres maximalen Öffnungsdurchmessers liegt,
      - wenn die Umgebungstemperatur niedriger als oder gleich 25 °C ist, der Öffnungsdurchmesser der ersten Entspannungsvorrichtung (7) in der Größenordnung von 20 % ihres maximalen Öffnungsdurchmessers liegt.

2. Steuerverfahren nach dem vorhergehenden Anspruch, **dadurch gekennzeichnet, dass** es einen Schritt des Steuerns der Drehzahl des Kompressors (3) umfasst, sodass die Temperatur des dritten Elements (300) nach dem Wärmeaustausch mit dem zweiten Verdampfer (15) einen Sollwert erreicht und hält.

3. Steuerverfahren nach einem beliebigen der vorhergehenden Ansprüche, **dadurch gekennzeichnet, dass** es einen Schritt des Steuerns des Öffnungsdurchmessers der zweiten Entspannungsvorrichtung (13) in Abhängigkeit von der Differenz zwischen der Überhitzung des Kältemittels am Ausgang des zweiten Verdampfers (15) und einer Sollüberhitzung umfasst.

4. Steuerverfahren nach einem beliebigen der vorhergehenden Ansprüche, **dadurch gekennzeichnet, dass** es Folgendes umfasst:

   - einen Schritt des Bestimmens der maximal zulässigen Überhitzung des Kältemittels am Eingang des Kompressors (3) für eine maximale Solltemperatur des Kältemittels am Ausgang des Kompressors (3),
   - einen Schritt des Bestimmens der Überhitzung des Kältemittels am Eingang des Kompressors (3),
   - einen Schritt des Vergleichens der Überhitzung des Kältemittels am Eingang des Kompressors (3) mit der bestimmten maximal zulässigen Überhitzung des Kältemittels am Eingang des Kompressors (3),

   wenn die Überhitzung des Kältemittels am Eingang des Kompressors (3) höher als die maximal zulässige Überhitzung des Kältemittels am Eingang des Kompressors (3) ist, umfasst das Steuerverfahren einen Schritt des Absenkens der Überhitzung des Kältemittels am Eingang des Kompressors (3), bis die Überhitzung des Kältemittels am Eingang des Kompressors (3) niedriger als oder gleich der maximal zulässigen Überhitzung des Kältemittels am Eingang des Kompressors (3) ist.

5. Steuerverfahren nach Anspruch 4, **dadurch gekennzeichnet, dass** die zweite Entspannungsvorrichtung (13) ein elektronisches Expansionsventil ist und dass der Schritt des Absenkens der Überhitzung des Kältemittels am Eingang des Kompressors (3) durch das Öffnen der zweiten Entspannungsvorrichtung (13) erfolgt.

6. Steuerverfahren nach Anspruch 4, **dadurch gekennzeichnet, dass** der Schritt des Absenkens der Überhitzung des Kältemittels am Eingang des Kompressors (3) durch ein Öffnen der ersten Entspannungsvorrichtung (7) erfolgt, sodass Kältemittel durch den ersten Verdampfer (11) strömt.

7. Steuerverfahren nach dem vorhergehenden Anspruch, **dadurch gekennzeichnet, dass** der Schritt des Absenkens der Überhitzung des Kältemittels am Eingang des Kompressors (3) ferner durch eine Verringerung der Drehzahl des Kompressors (3) erfolgt.

**Claims**

1. Method for managing a thermal management device (1) for a motor vehicle comprising a coolant circuit, in which a coolant is intended to circulate, said coolant circuit comprising:

   - a main loop (A) comprising, in the direction of circulation of the coolant, a compressor (3), a condenser (5) configured to exchange heat energy with a first element (100), a first expansion device (7) and a first evaporator (11) configured to exchange heat energy with a second element (200);
   - a bypass branch (B) arranged parallel to the first expansion device (7) and the first evaporator (11), said bypass branch (B) comprising a second expansion device (13) and a second evaporator (15) arranged downstream of the second expansion device (13) and configured to exchange heat energy with a third element (300), said thermal management device (1) operating in a mode of strict cooling of the third element (300) in which the condenser (5) gives up heat energy to the first element (100) and only the second evaporator (15) absorbs heat energy from the third element (300), said management method comprising a step of managing the opening diameter of the first expansion device (7) as a function of the ambient temperature such that coolant circulates inside the first evaporator (11), the opening diameter of the first expansion device (7) decreasing as a function of the increase in the ambient temperature of the first element (100), said management method being **characterized in that**:

      - if the ambient temperature is above 25°C, the opening diameter of the first expansion device (7) is of the order of 5% of its maximum opening diameter,
      - if the ambient temperature is less than or equal to 25°C, the opening diameter of the first expansion device (7) is of the order of 200 of its maximum opening diameter.

2. Management method according to the preceding claim, **characterized in that** it comprises a step of managing the speed of rotation of the compressor (3) such that the temperature of the third element (300) after heat exchange with the second evaporator (15) reaches and maintains a setpoint value.

3. Management method according to either one of the preceding claims, **characterized in that** it comprises a step of managing the opening diameter of the second expansion device (13) as a function of the difference between the overheating of the coolant at the outlet of the second evaporator (15) and an overheating setpoint.

4. Management method according to any one of the preceding claims, **characterized in that** it comprises:

   - a step of determining the maximum admissible overheating of the coolant at the inlet of the compressor (3) for a maximum setpoint temperature of the coolant at the outlet of the compressor (3),
   - a step of determining the overheating of the coolant at the inlet of the compressor (3),
   - a step of comparing the overheating of the coolant at the inlet of the compressor (3) with the determined maximum admissible overheating of the coolant at the inlet of the compressor (3),

   if the overheating of the coolant at the inlet of the compressor (3) is greater than the maximum admissible overheating of the coolant at the inlet of the compressor (3), the management method comprises a step of lowering the overheating of the coolant at the inlet of the compressor (3) until the overheating of the coolant at the inlet of the compressor (3) is less than or equal to the maximum admissible overheating of the coolant at the inlet of the compressor (3).

5. Management method according to Claim 4, **characterized in that** the second expansion device (13) is an electronic expansion valve and **in that** the step of lowering the overheating of the coolant at the inlet of the compressor (3) is carried out by opening said second expansion device (13).

6. Management method according to Claim 4, **characterized in that** the step of lowering the overheating of the coolant at the inlet of the compressor (3) is carried out by opening the first expansion device (7) such that coolant passes through the first evaporator (11) .

7. Management method according to the preceding claim, **characterized in that** the step of lowering the overheating of the coolant at the inlet of the compressor (3) is also carried out by reducing the speed of rotation of the compressor (3).

Fig. 1

Fig. 2

Fig. 3

Fig. 4

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 3070316 A1